# FASCICULE DE BREVET EUROPEEN

(11) **EP 1 058 477 B1**
(45) Date de publication et mention de la délivrance du brevet: **26.03.2003**
(21) Numéro de dépôt: 00401509.5
(22) Date de dépôt: 29.05.2000
(51) Int. Cl.: H04Q 11/04

(54) **Dispositif d'interface entre un équipement ATM et un canal de transmission comportant une liaison radio synchrone**
Schnittstellenvorrichtung zwischen einem ATM-Gerät und einem synchronen Funk-Übertragungskanal
Interface apparatus between an ATM equipment and a synchronous radio transmission channel

(30) Priorité: 01.06.1999 FR 9906868
(43) Date de publication de la demande: 06.12.2000
(73) Titulaire: FRANCE TELECOM, 75015 Paris (FR)
(72) Inventeur: DeLesalle, Christophe, 22700 Perros-Guirec (FR); Tortelier, Patrick, 92110 Clichy (FR)
(74) Mandataire: Loisel, Bertrand

(56) Documents cités:
- EP-A- 0 755 164
- WO-A-94/30028

## Description

La présente invention concerne les transmissions en mode de transfert asynchrone (ATM, « Asynchronous Transfer Mode »). Elle vise à permettre de telles transmissions sur des liaisons radio synchrones.

L'ATM est un mode de communication permettant de multiplexer de nombreux flux avec diverses caractéristiques de débit et de qualité de service (délais et taux d'erreurs). Par exemple, les flux vidéo sont les flux de données les plus exigeants, car ils ont un débit élevé et ils nécessitent un taux d'erreurs relativement bas (de l'ordre de 10⁻⁶) avec des contraintes de délai très strictes.

Les unités de données élémentaires transmises en ATM sont appelées cellules, et consistent en des paquets de 53 octets, dont 48 octets de partie utile (payload) précédés par un en-tête de 5 octets.

Transporter un flux de cellules ATM sur une interface radio synchrone à haut débit présente les difficultés suivantes :
- l'interface radio de type synchrone doit pouvoir supporter un flux de données asynchrone (ATM),
- la taille des paquets véhiculés sur l'interface radio par intervalle de temps ne correspond généralement pas à celle des cellules ATM,
- le taux d'erreurs qu'on peut attendre sur une telle interface radio est bien plus grand que celui voulu pour des applications multimédia,
- le retard introduit par les traitements de la chaîne de communication doit être le plus faible possible pour respecter les contraintes strictes de certaines applications en termes de délais de transmission.

Parmi les liaisons radio auxquelles l'invention peut s'appliquer, on peut citer les liaisons DECT (« Digital Enhanced Cordless Télécommunications »).

L'interface radio du DECT a été conçue initialement comme un accès sans fil à un réseau fixe fournissant à chaque utilisateur un débit de 32 kbit/s sans protection, essentiellement destiné au transport de la parole (mode dit non protégé). Un tel système est divulgué dans WO-A1-94/30028. Il existe aussi un mode protégé, destiné au transport de données et qui fait intervenir un code correcteur d'erreurs en bloc dont l'inconvénient est de nécessiter un algorithme de décodage complexe (décodage des codes BCH). Par une technique d'allocation multi-slots, la norme autorise néanmoins d'offrir des connexions radio à haut débit symétriques ou asymétriques dont chaque sens de transmission est constitué d'un nombre entier de canaux à 32 kbit/s sans protection. Du fait du simple codage canal, chaque radio n'offre qu'un taux d'erreurs d'environ 10⁻³.

Il paraît donc délicat d'employer de telles liaisons pour transporter de façon fiable des cellules ATM pour divers types d'application.

Un but principal de la présente invention est de surmonter cette difficulté.

L'invention propose ainsi un dispositif d'interface entre un équipement ATM et un canal de transmission comportant une liaison radio synchrone. Ce dispositif d'interface est agencé pour traiter :
- des cellules ATM ;
- des unités de données segmentées contenant chacune soit des données extraites d'au moins une cellule ATM et une information de cadrage repérant les débuts de cellules ATM dans lesdites données extraites, soit des données de bourrage en cas d'absence de cellules ATM à transmettre ;
- des unités de données numérotées contenant chacune une unité de données segmentées et une information de numérotation, certaines au moins des unités de données numérotées contenant en outre une information d'acquittement ; et
- des unités de données protégées ayant la taille de paquets transmissibles sur la liaison radio et comportant chacune un champ de données pour contenir une unité de données numérotées et un champ de vérification d'intégrité pour contenir un code de vérification d'intégrité calculé à partir de ladite unité de données numérotées.
Le dispositif d'interface comprend, pour l'émission d'un flux de cellules ATM sur le canal de transmission :
- une mémoire tampon recevant ledit flux de cellules ATM de l'équipement ATM ;
- des moyens de formation d'une première séquence d'unités de données segmentées contenant chacune des données lues dans la mémoire tampon ;
- des moyens de formation d'une seconde séquence d'unités de données numérotées contenant chacune une unité de données segmentées de la première séquence et une information de numérotation générée dans l'ordre des unités de données segmentées de la première séquence ;
- des moyens de formation d'une troisième séquence d'unités de données protégées contenant chacune une unité de données numérotées de la seconde séquence et le code de vérification d'intégrité calculé pour ladite unité de données numérotées, l'ordre des unités de données protégées dans la troisième séquence étant celui des unités de données numérotées qu'elles contiennent dans la seconde séquence ; et
- des moyens d'émission de la troisième séquence d'unités de données protégées sur le canal de transmission.
Le dispositif d'interface comprend en outre, pour la réception d'un flux de cellules ATM depuis le canal de transmission :
- des moyens de réception, depuis le canal de transmission, d'une quatrième séquence d'unités de données protégées ;
- des moyens de détection d'erreurs de transmission pour recalculer un code de vérification d'intégrité sur la base du contenu du champ de données de chaque unité de données protégées de la quatrième séquence, comparer le code recalculé au contenu du champ de vérification d'intégrité de ladite unité de données protégées et signaler une erreur de transmission pour ladite unité de données protégées si la comparaison révèle une différence ;
- des moyens de formation d'une cinquième séquence d'unités de données numérotées respectivement extraites des unités de données protégées de la quatrième séquence pour lesquelles aucune erreur de transmission n'a été signalée ;
- des moyens de formation d'une sixième séquence d'unités de données segmentées respectivement extraites des unités de données numérotées de la cinquième séquence ; et
- des moyens de reconstitution d'un flux de cellules ATM délivré à l'équipement ATM, à partir des données contenues dans les unités de données segmentées de la sixième séquence, réordonnées conformément aux informations de numérotation contenues dans les unités de données numérotées de la cinquième séquence.
Les moyens de formation de la seconde séquence d'unités de données numérotées comprennent des moyens pour inclure dans des unités de données numérotées de la seconde séquence des informations d'acquittement indicatives des unités de données protégées de la quatrième séquence pour laquelle une erreur de transmission a été signalée, et des moyens pour analyser les informations d'acquittement contenues dans les unités de données numérotées de la cinquième séquence afin d'inclure dans la seconde séquence d'unités de données numérotées des répétitions d'unités de données numérotées de la seconde séquence contenues dans des unités de données protégées de la troisième séquence pour lesquelles les informations d'acquittement analysées contenues dans les unités de données numérotées de la cinquième séquence indiquent une erreur de transmission.

L'invention procure ainsi une couche d'adaptation entre la couche ATM et le support de la liaison radio (couche MAC, « Médium Access Control »). Elle remplit les fonctions suivantes :
1) Adaptation des flux. La transmission des flux ATM est asynchrone, tandis que la transmission des données sur l'interface radio est synchrone. Certaines applications n'ont pas de débits spécifiques (Internet par exemple) et peuvent donc émettre des données à un débit supérieur au débit autorisé sur le support radio. Le dispositif d'interface prend en charge l'adaptation asynchrone/synchrone et la régulation de débit entre les flux ATM et les flux transmis sur l'interface radio.
2) Adaptation des données. Le dispositif effectue la décomposition des cellules ATM (53 octets) en paquets directement transmissibles sur l'interface radio (40 octets dans l'exemple du DECT). De façon réciproque, côté récepteur, il recompose le flux original de cellules ATM à partir des paquets reçus.
3) Protection des données. Afin de garantir une certaine qualité de transmission au niveau de la liaison radio, le dispositif utilise un mécanisme d'acquittement et de retransmission des données (ARQ, de « Automatic Repeat reQuest ») adapté aux caractéristiques du canal radio synchrone. Une manière plus usuelle de résoudre le problème lié à la protection des données au niveau d'une interface radio aurait été de protéger les données à transmettre au moyen d'un code correcteur d'erreurs. Dans le cas fréquent où le canal est tel que les erreurs de transmission surviennent par paquets, il faut au préalable entrelacer les données afin que, après opération inverse au niveau du récepteur (désentrelacement), les erreurs se retrouvent éparpillées et que le décodeur puisse fonctionner correctement. Cette opération, d'autant meilleure que la durée d'entrelacement est plus grande, entre en conflit avec la contrainte sur le retard de transmission. De plus, le codage correcteur d'erreurs a pour effet de diminuer le débit utile car il ajoute de la redondance aux données à transmettre.
4) Respect de la Qualité de Service (QoS). Afin de respecter les qualités de service requises par les applications en termes de taux d'erreurs et de délai de transmission, le dispositif permet, pour chaque connexion ATM (service), de paramétrer le mécanisme de protection des données en fonction des caractéristiques du service. On peut jouer sur le nombre maximal de retransmissions autorisé ainsi que sur le type d'acquittement du mécanisme d'ARQ pour offrir la QoS demandée en termes de taux d'erreurs et de délais.

D'autres particularités et avantages de la présente invention apparaîtront dans la description ci-après d'exemples de réalisation non limitatifs, en référence aux dessins annexés, dans lesquels :
- les figures 1 à 3 sont des schémas illustrant plusieurs applications possibles du dispositif d'interface selon l'invention ;
- la figure 4 est un diagramme illustrant la structure d'unité de données traitée par le dispositif ;
- la figure 5 est un schéma synoptique d'un exemple de dispositif selon l'invention ;

L'invention est décrite ci-après dans son application à la transmission de cellules ATM par l'intermédiaire d'un canal comportant une liaison radio synchrone de type DECT. Le dispositif met en oeuvre une couche d'adaptation ci-après appelée ADAL (« ATM-DECT Adaptation Layer »).

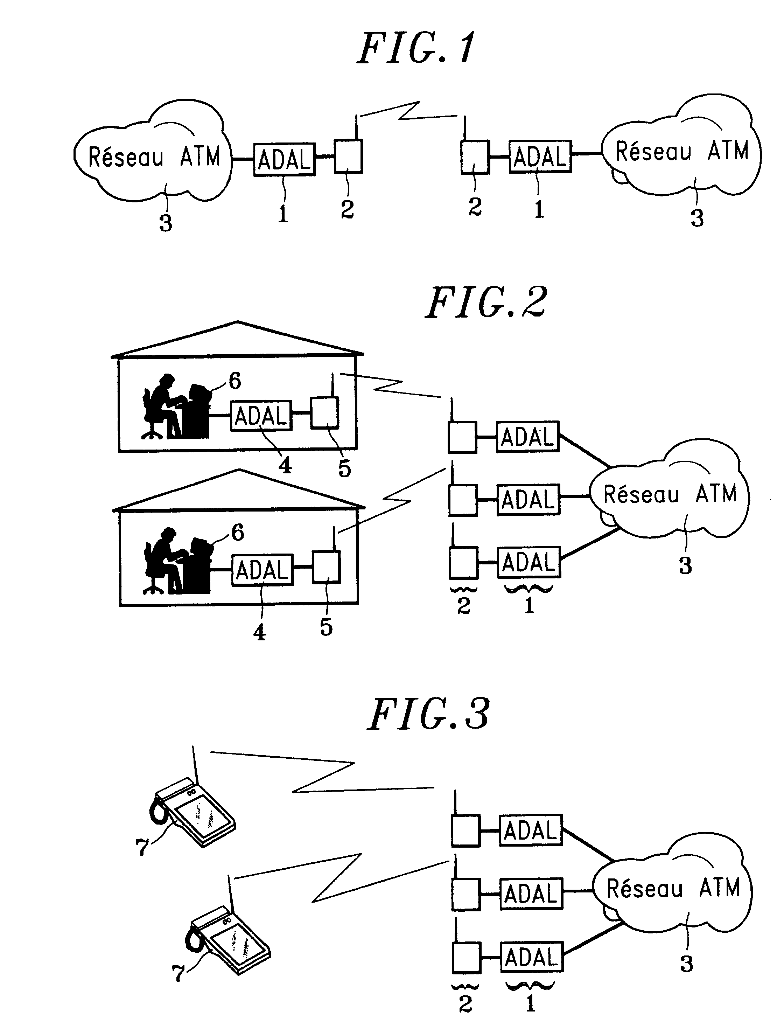

L'interface ADAL peut être utilisée dans diverses circonstances dans le contexte du haut débit. Dans l'exemple illustré sur la figure 1, des dispositifs d'interface 1 sont placés entre des bornes 2 de type DECT procurant des liaisons radio à haut débit et des portions 3 d'un réseau ATM, ce qui permet d'offrir un support radio à des communications à haut débit en substitution d'un lien filaire dans un réseau fixe.

Dans l'exemple d'application représenté sur la figure 2, des dispositifs d'interface 1, 4 selon l'invention sont disposés d'une part du côté réseau et d'autre part du côté utilisateur pour offrir des accès à haut débit à des utilisateurs fixes reliés au réseau d'accès ATM par une boucle locale radio. Du côté réseau, les dispositifs d'interface 1 sont installés entre le réseau fixe ATM 3 et les bornes radio 2 gérées par l'opérateur. Du côté de l'utilisateur, le dispositif d'interface 4 est situé entre un terminal DECT 5 et le terminal ATM 6 dont dispose l'utilisateur.

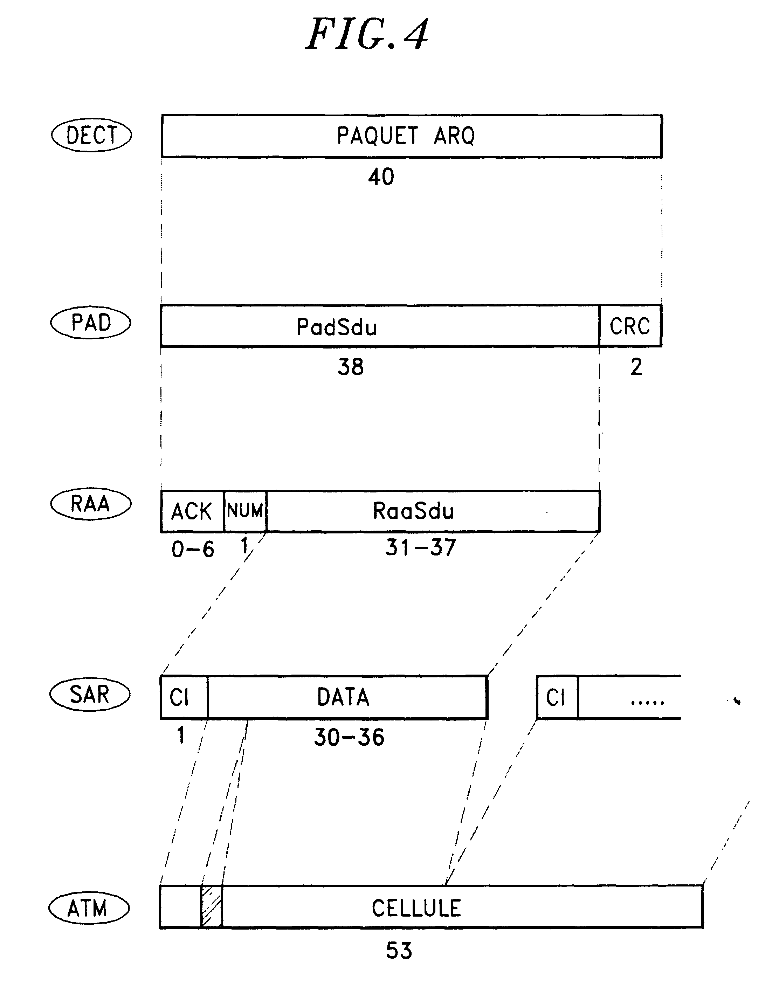

Dans le cas de la figure 3, le dispositif 1 selon l'invention permet d'offrir des connexions radio à haut débit à des utilisateurs d'un réseau mobile pourvu de terminaux mobiles multimédia 7. Du côté réseau, l'installation du dispositif 1 est semblable au cas de la figure 2. En général, une couche ADAL sera également prévue dans les protocoles supportés par les terminaux 7.

Dans chacun des exemples illustrés par les figures 1 à 3, le canal établi entre deux dispositifs mettant en oeuvre la couche ADAL se limite à un canal radio DECT. Dans la pratique, le canal radio peut ne former qu'une partie de ce canal de transmission, en étant complété par d'autres canaux de support (par exemple MIC, ATM, ...) capable de transporter les paquets ARQ décrits ci-après.

Le protocole de communication entre deux couches ADAL distantes assure le transport d'un flux ATM sur une connexion établie entre ces deux couches ADAL et empruntant une liaison radio. Cette connexion est ci-après appelée « connexion ARQ ». Sur cette connexion ARQ circulent des paquets appelés « paquets ARQ » émis au rythme de trames ARQ.

Les liaisons radio utilisées étant de type DECT, les paquets ARQ sont des blocs de 40 octets générés entre deux couches ADAL. Ces blocs sont directement transmissibles sur l'interface radio au niveau des champs B des trames DECT concernées par la connexion radio. Un paquet ARQ correspond donc exactement à un paquet DECT.

Les paquets ARQ sont émis au rythme de trames ARQ correspondant à la capacité de transmission de la connexion radio DECT utilisée. Ainsi, chaque trame ARQ, constituée d'un nombre fixe de paquets ARQ, est transmise sur une trame DECT, synchrone toutes les 10 ms. Si le canal DECT alloué à la connexion ARQ se compose de *n* intervalles de temps élémentaires par trame DECT pour un débit de *n*×32 kbit/s, la trame ARQ se composera de *n* paquets ARQ émis dans les intervalles de temps en question au cours de la trame DECT.

La couche ADAL implémentée dans un dispositif d'interface selon l'invention est composée de trois sous-couches :
- une sous-couche de protection et de détection PAD (« Protection And Detection »);
- une sous-couche de retransmission et d'acquittement RAA (« Retransmission And Acknowledgement ») ; et
- une sous-couche de segmentation et de réassemblage SAR (« Segmentation And Reassembly »).

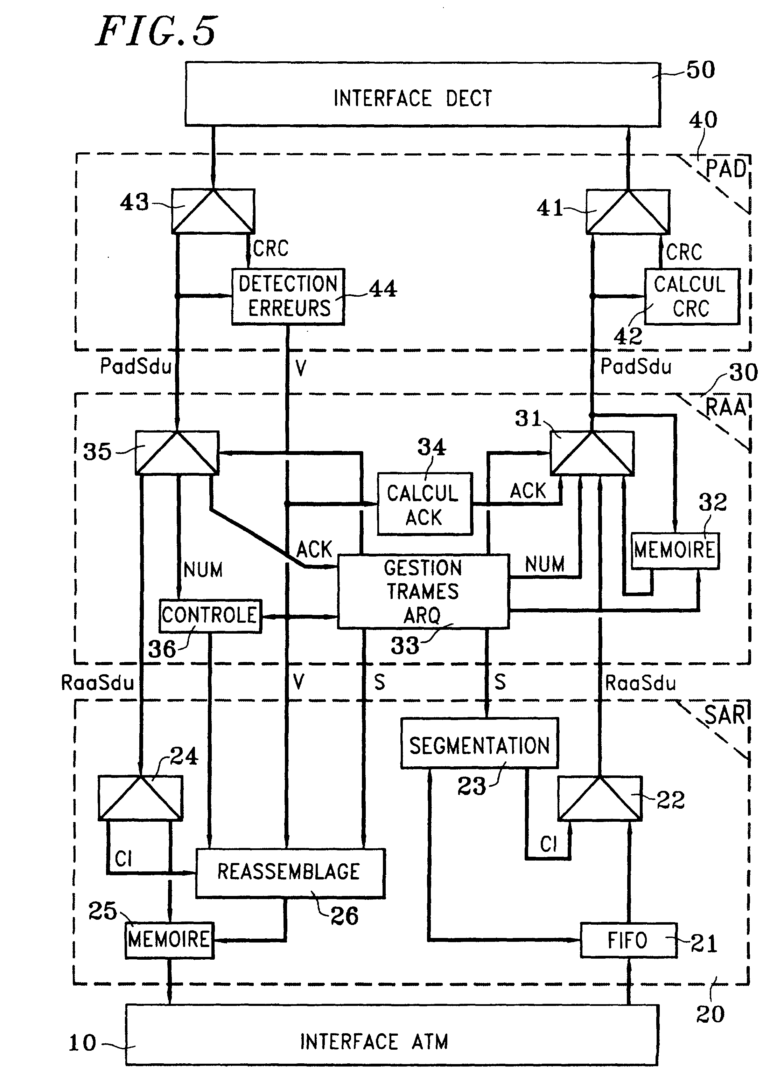

La structure des données échangées entre les différentes couches est illustrée par le diagramme de la figure 4, et la figure 5 montre l'organisation de ces couches dans un exemple de dispositif d'interface selon l'invention.

La couche MAC mise en oeuvre dans l'interface DECT 50 traite les paquets ARQ formant les paquets DECT de 40 octets échangés sur la connexion ARQ. Cette couche MAC remplit les fonctions d'établissement/libération des connexions radio, de transport des données radio et de transmission à la couche PAD de la synchronisation DECT au niveau trame.

Le paquet ARQ forme une unité de données protégées comportant un champ de données de 38 octets et un champ de vérification d'intégrité de 2 octets.

La sous-couche PAD 40 assure le contrôle de l'intégrité des paquets ARQ pendant leur transport sur la connexion ARQ. Elle compose ces paquets avec les 38 octets de l'unité de données numérotées PadSdu reçue de la sous-couche RAA, complétés par un code cyclique de redondance (CRC) placé dans le champ de vérification d'intégrité. La sous-couche PAD assure également les fonctions d'émission et de réception des paquets ARQ sur un support de transmission particulier qui la relie éventuellement à l'interface DECT 50, et de transmission à la sous-couche RAA de la synchronisation DECT à 10 ms.

Les éléments du dispositif d'interface relevant de la sous-couche PAD 40 sont représentés schématiquement sur la figure 5. Le multiplexeur 41 forme les paquets ARQ émis en adjoignant à l'unité de données numérotées PadSdu reçue de la sous-couche RAA le CRC calculé de façon classique par un module 42 sur la base des données contenues dans cette unité de 38 octets.

En réception, le démultiplexeur 43 sépare l'unité de données numérotées reçue PadSdu et le CRC reçu. Un module de détection d'erreurs 44 recalcule le CRC sur la base de l'unité de données PadSdu reçue, et le compare au CRC reçu afin d'indiquer une éventuelle erreur de réception dans l'information binaire V délivrée à la sous-couche RAA.

En termes de protocole, trois primitives sont échangées entre les sous-couches PAD et RAA :
- une primitive BR (« Block Request »), adressée par la sous-couche RAA à la sous-couche PAD pour demander la transmission d'un bloc de données PadSdu de 38 octets fourni comme paramètre de cette primitive ;
- une primitive BI (« Block Indication ») adressée par la sous-couche PAD à la sous-couche RAA pour indiquer la réception d'un bloc de données, en fournissant le bloc de données PadSdu en question ainsi que l'information binaire de validité V ;
- une primitive PAD_SYNCH.ind adressée par la sous-couche PAD à la sous-couche RAA pour synchroniser cette dernière sur le début des trames ARQ.

La sous-couche RAA 30 gère la transmission synchrone des paquets ARQ, la partie concernant le mécanisme d'acquittement et de retransmission, ainsi que l'absorption de la gigue générée par la retransmission. L'unité de données numérotée PadSdu gérée par la sous-couche RAA se compose de 38 octets (figure 4), comprenant :
- des informations d'acquittement optionnelles ACK, de taille variable entre 0 et 6 octets,
- un octet NUM de numérotation des paquets, servant à la retransmission sélective des ces derniers,
- une partie utile RaaSdu qui correspond l'unité de données segmentée délivrée par la sous-couche SAR. La taille de la partie utile RaaSdu intégrée à chaque unité de données PadSdu dépend de l'acquittement éventuel à lui insérer, afin que la longueur totale soit toujours de 38 octets.

Les informations d'acquittement ACK renvoyées sont calculées trame ARQ par trame ARQ. Elles indiquent comment chaque paquet ARQ d'une même trame ARQ a été reçu. Pour minimiser la taille des acquittements, les paquets ARQ ne sont pas acquittés aléatoirement, mais de manière relative par rapport à leur numéro d'ordre dans la trame ARQ (ce numéro d'ordre est distinct de l'information de numérotation NUM incluse dans les unités des données PadSdu). Ceci implique que les connexions ARQ garantissent la non-perte, la non-insertion et le bon séquencement des paquets ARQ, et que le protocole employé au niveau de l'émetteur conserve en mémoire la composition des trames ARQ émises.

Le protocole peut fonctionner selon deux modes d'acquittement : positif ou négatif. En mode d'acquittement négatif, il considère les paquets ARQ émis comme correctement reçus par défaut. Dans ce mode, on limite le débit de transmission et le délai en cas de non-réception des informations d'acquittement depuis l'autre partie, mais certains paquets ARQ incorrectement reçus par l'autre partie pourront ne pas être retransmis. En mode d'acquittement positif, c'est l'inverse : les paquets sont considérés comme incorrectement reçus par défaut. On obtient une fiabilité supérieure, mais on peut parfois retransmettre des paquets ARQ déjà reçus correctement de l'autre côté.

Le mode d'acquittement employé pourra être sélectionné à l'établissement de la connexion ARQ. Le mode négatif convient mieux aux débits élevés et aux fortes contraintes de délais, mais implique un taux d'erreur plus élevé que le mode positif.

Les acquittements sont transmis au niveau de l'interface radio dans la bande, c'est-à-dire qu'ils sont directement intégrés au flux de données utiles circulant entre les deux interfaces ADAL appariées. Le fait de transporter les informations d'acquittement dans les champs B des trames DECT assure leur transport dans toutes les phases de communication, y compris en cas de handover.

Les informations d'acquittement sont incluses au début du premier paquet ARQ de chaque trame ARQ. Ainsi, la partie disponible pour les unités de données segmentées RaaSdu dans le premier paquet de chaque trame est réduite de la taille occupée par les informations d'acquittement. La sous-couche RAA demande dans ce cas à la sous-couche SAR de lui délivrer une unité de données RaaSdu dont la taille fait 37 octets moins la taille du champ d'acquittement. Pour les autres paquets ARQ de la trame, la sous-couche RAA demande à la sous-couche SAR de lui délivrer des unités de données RaaSdu de 37 octets. Pour limiter l'occupation de la bande passante par les informations d'acquittement, leur taille est variable entre 1 et 6 octets et calculée en fonction du débit réservé pour la connexion dans le sens opposé. Pour acquitter une trame ARQ, il suffit d'autant de bits (par blocs de 8 bits pour avoir un nombre d'octets entier) qu'il y a de paquets ARQ composant la trame ARQ reçue.

Les bits des informations d'acquittement correspondant à l'acquittement des paquets ARQ sont par exemple mis à 1 si le paquet ARQ a été correctement reçu, et à 0 sinon. Les bits utiles, correspondant à l'acquittement d'un paquet reçu correctement ou non, sont par exemple cadrés à droite par rapport aux octets réservés pour les informations d'acquittement.

Les trames ARQ peuvent bénéficier d'un acquittement simple ou double. Le double acquittement consiste en ce que les informations d'acquittement incluses dans le premier paquet de chaque trame ARQ acquittent deux trames ARQ distinctes reçues dans le sens opposé, et en ce que chaque trame ARQ reçue soit acquittée par deux trames ARQ distinctes émises dans le sens opposé.

Le double acquittement contenu dans chaque trame ARQ émise concerne deux trames ARQ reçues, consécutivement ou non. L'écart entre ces deux trames ARQ reçues est un paramètre qu'on peut régler à l'établissement de la connexion ARQ en fonction des contraintes applicatives et des caractéristiques radio de l'environnement.

Le simple acquittement est transmis sans plus de protection que les données d'utilisateur. L'utilisation d'un double acquittement constitue donc une sécurisation des acquittements.

Le double acquittement augmente le délai de retransmission ainsi que l'occupation de la bande passante. Le choix du type d'acquittement, simple ou double, et des paramètres correspondants permet donc de jouer sur la qualité de service offerte.

Un autre paramètre lié à la qualité de service est le nombre maximum de retransmissions possible pour un même paquet. Du côté de l'émetteur, ce nombre sert à limiter le nombre de retransmission d'un même paquet ARQ. Il permet en outre au récepteur de déterminer le temps maximum que peut prendre la transmission d'un paquet ARQ. Pour ne pas encombrer inutilement la bande, les paquets ARQ vides ne sont pas retransmis.

Dans la sous-couche RAA 30 (figure 5), le multiplexeur 31 assemble les unités de données numérotées PadSdu, qui sont fournies à la sous-couche PAD 40 et stockées temporairement dans une mémoire 32. Le module 33 de gestion des trames ARQ prend en charge les fonctions de synchronisation dans la sous-couche RAA. Il commande le multiplexeur 31 pour que les informations d'acquittement ACK, calculées par un module 34 sur la base des informations binaires de validité V reçues de la sous-couche PAD 40, soient incluses au début du premier paquet de chaque trame ARQ. Le module 33 délivre également les informations de numérotation NUM sur 8 bits qui permettent de repérer l'unité de données transmise par rapport à l'ensemble de la séquence.

Le module 33 reçoit en outre du démultiplexeur 35 les informations d'acquittement ACK reçues dans le sens opposé. Il analyse ces informations pour commander la lecture dans la mémoire 32 de chaque paquet à réémettre, à savoir de chaque paquet pour lequel un bit d'acquittement à 0 a été reçu, ou pour lequel les informations d'acquittement ont été mal reçues (ce qu'indique l'information binaire de validité V pour le premier paquet des trames ARQ reçues) en cas d'acquittement en mode positif. Le paquet éventuellement lu dans la mémoire 32 est adressé au multiplexeur 31 plutôt qu'un paquet qui serait réclamé à la sous-couche SAR.

Pour limiter les retards de retransmission, on peut prévoir que, dans chaque trame ARQ, on commence par les éventuelles retransmissions de paquets, avec en premier ceux dont le numéro NUM est le plus ancien, et que la formation de nouveaux paquets, dont les parties utiles sont requises de la couche SAR, ait lieu une fois toutes les retransmissions effectuées.

Dans le sens de la réception, le démultiplexeur 35 sépare les unités de données segmentées RaaSdu, les informations de numérotation NUM et, pour le premier paquet de chaque trame ARQ, les informations d'acquittement ACK fournies au module 33. Le module de contrôle 36 traite les informations de numérotations NUM et les informations de validité V relatives aux paquets reçus afin de commander le réassemblage du flux ATM. Lorsqu'un paquet numéroté a été correctement reçu, l'écriture de sa partie utile dans le flux ATM à délivrer est commandée. Sinon, cette écriture est inhibée jusqu'à ce que le paquet ait été incorrectement reçu un nombre de fois égal au nombre maximum de retransmissions prévu à l'établissement de la connexion.

En termes de protocole, l'interface entre les couches RAA et SAR comporte trois primitives :
- une primitive DR (« Data Request ») adressée par la sous-couche RAA à la sous-couche SAR pour requérir une unité des données segmentées à transmettre RaaSdu, de taille S dépendant de sa position dans la trame ARQ;
- une primitive DG (« Data Granted »), adressée par la sous-couche SAR à la sous-couche RAA pour répondre en fournissant une unité de données à transmettre ; et
- une primitive Dl (« Data Indication »), adressée par la sous-couche RAA à la sous-couche SAR pour indiquer la réception d'une unité de données RaaSdu, de taille S dépendant de sa position dans la trame ARQ reçue, et de validité indiquée par le bit V.

La sous-couche SAR 20 est chargée de la segmentation et du réassemblage du flux de cellules ATM en vue de son transport sur la liaison radio. Elle s'occupe de la partie adaptation de données du protocole ARQ : décomposition/recomposition du flux ATM et fourniture des données utiles intégrées dans les paquets ARQ. La sous-couche SAR gère des unités de données segmentées RaaSdu dont la taille varie de 31 à 37 octets pour les raisons indiquées précédemment.

Ces unités de données (figure 4) sont composées d'un octet correspondant à une information Cl de cadrage des données par rapport à la séquence de cellules ATM, suivie d'un champ de données utiles de taille variable (30 à 36 octets) extraite du flux de cellules ATM transportées.

La sous-couche SAR 20 conserve dans une mémoire tampon 21 le flux de cellules ATM fourni par l'interface ATM 10, et le transmet par blocs à la sous-couche RAA quand cette dernière le demande. Un multiplexeur 22 adjoint aux données extraites des cellules ATM et lues dans la mémoire tampon 21 les informations de cadrage Cl délivrées par un module de segmentation 23. Ce module 23 reçoit les demandes de blocs de données de taille S depuis la sous-couche RAA, et commande de façon correspondante l'extraction de ces données depuis la mémoire tampon 21. L'information de cadrage Cl est mise à jour en fonction de la position des données courantes par rapport aux frontières entre cellules ATM successives. A titre d'exemple, l'octet d'information de cadrage Cl peut être décomposé en un champ de deux bits TYP, indiquant le type de bloc, et un champ de repérage SOC de 6 bits, codés de la façon suivante :
- TYP = 00, SOC = 000000 : bloc non assigné, c'est-à-dire que la mémoire tampon 21 ne contient aucune donnée au moment d'une requête issue de la sous-couche RAA ;
- TYP = 10: bloc partiellement assigné, c'est-à-dire ne contenant des données utiles que jusqu'à une position, comprise entre 1 et 35 octets, désignée par le champ SOC ;
- TYP = 11, SOC = 111111 : la partie données du bloc RaaSdu s'étend sur une seule cellule ATM ne débutant pas dans ce bloc RaaSdu ;
- TYP = 11, SOC = 000000 : la partie donnée du bloc RaaSdu commence juste au début d'une cellule ATM ; et
- TYP = 11, SOC ≠ 111111 et 000000 : la partie donnée du bloc RaaSdu recouvre deux cellules successives, la position du début de la seconde cellule, comprise entre 2 et 36 octets étant indiquée par le champ SOC.

Quand le module 33 de gestion des trames ARQ lit un paquet à retransmettre dans la mémoire 32 de la sous-couche RAA, il examine l'octet d'information de cadrage Cl contenu dans ce paquet pour en inhiber la retransmission s'il s'agit d'un bloc non assigné, afin d'éviter des retards inutiles.

Dans la partie relevant de la sous-couche SAR 20, le dispositif d'interface comporte en outre un démultiplexeur 24 auquel sont appliquées les unités de données segmentées RaaSdu reçues depuis la couche RAA 30, et qui en extrait les informations de cadrage Cl et les données utiles. Un module de réassemblage 26, contrôlé par le module 36 de la couche RAA, reçoit l'information de cadrage extraite Cl, le bit de validité en V et l'indication S sur la taille de la partie utile du paquet courant. En fonction de ces informations, le module de réassemblage 26 commande l'écriture des données utiles aux emplacements adéquats d'une mémoire 25 dans laquelle les cellules ATM sont reconstruites avant d'être délivrées à l'interface ATM 10. Le module 26 peut également indiquer à l'interface ATM quelles cellules sont susceptibles de comporter des erreurs, sur la base des bits de validité V.

Deux modes de transport des cellules ATM peuvent être utilisées dans l'interface ADAL : un mode normal et un mode optimisé.

En mode normal, tout le contenu des cellules ATM est écrit dans la mémoire tampon 21 pour être inclus dans les unités de données segmentées RaaSdu et dans les paquets ARQ, sauf l'octet HEC de codage détecteur d'erreurs sur l'en-tête ATM. En conséquence, les 48 octets de la partie utile de chaque cellule sont transportées, de même que les quatre premiers octets de l'en-tête. Après leur transport, les cellules de 52 octets sont reformatées par le module 26 en véritables cellules ATM de 53 octets, après insertion de l'octet HEC initialisé par défaut à 0.

Le mode optimisé permet de s'adapter à la relative faiblesse des débits disponibles sur l'interface radio DECT. Dans ce mode, les en-têtes des cellules ATM sont réduits à deux octets, à savoir 4 bits pour le VPI, 8 bits pour le VCI et 4 bits pour le champ PT/CLP (« Payload Type/Cell Loss Priority »). D'autres bits sont donc enlevés en plus des bits de l'octet HEC, à savoir certains bits des identifications de conduit et de voie virtuels VPI/VCI et les bits de contrôle de flux GFC (« Generic Flow Control »). Après leur transport sur une connexion ARQ, les cellules réduites sont reformatées en cellules complètes par le module 26. Les champs GFC, HEC et les autres parties non transportées de l'en-tête ATM sont initialisées par défaut à 0 pendant cette opération. L'utilisation de ces cellules réduites a pour conséquence une limitation des nombres de bits utilisables pour identifier les connexions virtuelles et la perte de l'information contenue dans le champ GFC. La présence des champs PT/CLP dans l'en-tête des cellules réduites permet le transport de cellules ATM au format AAL5.

Le mode normal permet de gagner un octet sur 53, ce qui correspond à un gain de 1,9 % sur la bande passante nette disponible pour les applications de l'utilisateur. Le mode optimisé fait passer ce gain à 5,7 %.

## Revendications

1. Dispositif d'interface entre un équipement ATM et un canal de transmission comportant une liaison radio synchrone, le dispositif d'interface étant agencé pour traiter :
- des cellules ATM ;
- des unités de données segmentées (RaaSdu) contenant chacune soit des données extraites d'au moins une cellule ATM et une information de cadrage repérant les débuts de cellules ATM dans lesdites données extraites, soit des données de bourrage en cas d'absence de cellules ATM à transmettre ;
- des unités de données numérotées (PadSdu) contenant chacune une unité de données segmentées et une information de numérotation, certaines au moins des unités de données numérotées contenant en outre une information d'acquittement ; et
- des unités de données protégées ayant la taille de paquets transmissibles sur la liaison radio et comportant chacune un champ de données pour contenir une unité de données numérotées et un champ de vérification d'intégrité pour contenir un code de vérification d'intégrité calculé à partir de ladite unité de données numérotées,
le dispositif d'interface comprenant, pour l'émission d'un flux de cellules ATM sur le canal de transmission :
- une mémoire tampon (21) recevant ledit flux de cellules ATM de l'équipement ATM ;
- des moyens (22,23) de formation d'une première séquence d'unités de données segmentées contenant chacune des données lues dans la mémoire tampon ;
- des moyens (31-34) de formation d'une seconde séquence d'unités de données numérotées contenant chacune une unité de données segmentées de la première séquence et une information de numérotation générée dans l'ordre des unités de données segmentées de la première séquence ;
- des moyens (41,42) de formation d'une troisième séquence d'unités de données protégées contenant chacune une unité de données numérotées de la seconde séquence et le code de vérification d'intégrité calculé pour ladite unité de données numérotées, l'ordre des unités de données protégées dans la troisième séquence étant celui des unités de données numérotées qu'elles contiennent dans la seconde séquence ; et
- des moyens (50) d'émission de la troisième séquence d'unités de données protégées sur le canal de transmission,
le dispositif d'interface comprenant, pour la réception d'un flux de cellules ATM depuis le canal de transmission :
- des moyens (50) de réception, depuis le canal de transmission, d'une quatrième séquence d'unités de données protégées ;
- des moyens (44) de détection d'erreurs de transmission pour recalculer un code de vérification d'intégrité sur la base du contenu du champ de données de chaque unité de données protégées de la quatrième séquence, comparer le code recalculé au contenu du champ de vérification d'intégrité de ladite unité de données protégées et signaler une erreur de transmission pour ladite unité de données protégées si la comparaison révèle une différence ;
- des moyens (43) de formation d'une cinquième séquence d'unités de données numérotées respectivement extraites des unités de données protégées de la quatrième séquence pour lesquelles aucune erreur de transmission n'a été signalée ;
- des moyens (35,36) de formation d'une sixième séquence d'unités de données segmentées respectivement extraites des unités de données numérotées de la cinquième séquence ; et
- des moyens (24-26) de reconstitution d'un flux de cellules ATM délivré à l'équipement ATM, à partir des données contenues dans les unités de données segmentées de la sixième séquence, réordonnées conformément aux informations de numérotation contenues dans les unités de données numérotées de la cinquième séquence,
dans lequel les moyens de formation de la seconde séquence d'unités de données numérotées comprennent des moyens (34) pour inclure dans des unités de données numérotées de la seconde séquence des informations d'acquittement indicatives des unités de données protégées de la quatrième séquence pour laquelle une erreur de transmission a été signalée, et des moyens (33) pour analyser les informations d'acquittement contenues dans les unités de données numérotées de la cinquième séquence afin d'inclure dans la seconde séquence d'unités de données numérotées des répétitions d'unités de données numérotées de la seconde séquence contenues dans des unités de données protégées de la troisième séquence pour lesquelles les informations d'acquittement analysées contenues dans les unités de données numérotées de la cinquième séquence indiquent une erreur de transmission.

2. Dispositif selon la revendication 1, dans lequel les unités de données numérotées (PadSdu) de la seconde séquence sont regroupées en trames, de même que les unités de données protégées des troisième et quatrième séquences, et dans lequel des informations d'acquittement relatives à une trame de la quatrième séquence sont incluses dans la première unité de données numérotées de chaque trame de la seconde séquence.

3. Dispositif selon la revendication 2, dans lequel les moyens (33) d'analyse des informations d'acquittement sont agencés pour faire répéter les unités de données numérotées (PadSdu) d'une trame de la seconde séquence lorsque les moyens (44) de détection d'erreurs signalent une erreur de transmission pour la première unité de données protégées d'une trame de la quatrième séquence contenant des informations d'acquittement relatives à ladite trame de la seconde séquence.

4. Dispositif selon la revendication 2 ou 3, dans lequel les moyens (34) d'inclusion d'informations d'acquittement sont agencés pour inclure les informations d'acquittement, indicatives des unités de données protégées d'une trame de la quatrième séquence pour laquelle une erreur de transmission a été signalée, dans les premières unités de données numérotées (PadSdu) d'au moins deux trames de la seconde séquence.

5. Dispositif selon l'une quelconque des revendications 1 à 4, dans lequel les informations d'acquittement occupent un nombre de bits dépendant du débit disponible sur la liaison radio.

6. Dispositif selon l'une quelconque des revendications 1 à 5, dans lequel un octet (HEC) de codage détecteur d'erreurs sur l'en-tête est enlevé des données extraites de chaque cellule ATM pour être contenues dans une unité de données segmentées (RaaSdu).

7. Dispositif selon la revendication 6, dans lequel d'autres bits de l'en-tête de chaque cellule ATM sont enlevés des données extraites de chaque cellule ATM pour être contenues dans une unité de données segmentées (RaaSdu), les autres bits enlevés comprenant certains bits des identifications de conduit et de voie virtuels (VPINCI) et/ou des bits de contrôle de flux (GFC).

8. Dispositif selon l'une quelconque des revendications 1 à 7, dans lequel le nombre maximum de fois qu'une unité de données numérotées (PadSdu) de la seconde séquence peut être répété est un paramètre programmable.

## Claims

1. An interface device between an ATM equipment and a transmission channel having a synchronous wireless link, the interface device being arranged to process:
- ATM cells;
- segmented data units (RaaSdu), each containing either data extracted from at least one ATM cell and alignment data locating the starts of ATM cells in said extracted data or stuffing data if no ATM cells are to be transmitted;
- numbered data units (PadSdu), each containing a segmented data unit and numbering data, at least some of the numbered data units further containing acknowledgement data ; and
- protected data units having the size of packets which can be transmitted on the wireless link and each having a data field for containing a numbered data unit and an integrity verification field for containing an integrity verification code computed on the basis of said numbered data unit,
the device comprising, for the transmission of an ATM cell flow on the transmission channel:
- a buffer memory (21) receiving said ATM cell flow from the ATM equipment;
- means (22,23) for forming a first sequence of segmented data units, each containing data read from the buffer memory;
- means (31-34) for forming a second sequence of numbered data units, each containing a segmented data unit from the first sequence and numbering data generated in the sequence order of the segmented data units of the first sequence ;
- means (41,42) for forming a third sequence of protected data units, each containing a numbered data unit from the second sequence and the integrity verification code computed for said numbered data unit, the sequence order of the protected data units in the third sequence being that of the numbered data units which they contain in the second sequence; and
- means (50) for transmitting the third sequence of protected data units on the transmission channel,
the interface device comprising, for receiving an ATM cell flow from the transmission channel:
- means (50) for receiving a fourth sequence of protected data units from the transmission channel;
- transmission error detection means (44) for re-computing an integrity verification code on the basis of the contents of the data field of each protected data unit in the fourth sequence, comparing the re-computed code with the contents of the integrity verification field of said protected data unit and indicating a transmission error for said protected data unit if the comparison reveals a difference;
- means (43) of forming a fifth sequence of numbered data units respectively extracted from the protected data units of the fourth sequence for which no transmission error has been indicated;
- means (35,36) for forming a sixth sequence of segmented data units respectively extracted from the numbered data units of the fifth sequence; and
- means (24-26) for reconstructing an ATM cell flow output to the ATM equipment, on the basis of the data contained in the segmented data units of the sixth sequence, rearranged in accordance the numbering data contained in the numbered data units of the fifth sequence,
wherein the means for forming the second sequence of numbered data units comprise means (34) for inserting acknowledgement data in the numbered data units of the second sequence, whereby the acknowledgement data is indicative of the protected data units of the fourth sequence for which a transmission error has been indicated, and means (33) for analysing the acknowledgement data contained in the numbered data units of the fifth sequence in order to insert in the second sequence of numbered data units repeats of numbered data units from the second sequence contained in protected data units of the third sequence for which the analysed acknowledgement data contained in the numbered data units of the fifth sequence indicate a transmission error.

2. A device as claimed in claim 1, wherein the numbered data units (PadSdu) of the second sequence are grouped in frames, as are the protected data units of the third and fourth sequences, and wherein acknowledgement data relating to a frame of the fourth sequence is inserted in the first numbered data unit of each frame of the second sequence.

3. A device as claimed in claim 2, wherein the means (33) for analysing the acknowledgement data are arranged to cause the numbered data units (PadSdu) of a frame from the second sequence to be repeated if the error detection means (44) indicates a transmission error for the first protected data unit of a frame of the fourth sequence containing acknowledgement data relating to said frame of the second sequence.

4. A device as claimed in claim 2 or 3, wherein the means (34) for inserting acknowledgement data are arranged to insert the acknowledgement data, indicative of the protected data units of a frame of the fourth sequence for which a transmission error has been indicated, in the first numbered data units (PadSdu) of at least two frames of the second sequence.

5. A device as claimed in any one of claims 1 to 4, wherein the acknowledgement data occupies a number of bits dependent on the available rate on the wireless link.

6. A device as claimed in any one of claims 1 to 5, wherein a header error detection coding octet (HEC) is removed from the data extracted from each ATM cell to be contained in a segmented data unit (RaaSdu).

7. A device as claimed in claim 6, wherein other bits of the header of each ATM cell are removed from the data extracted from each ATM cell to be contained in a segmented data unit (RaaSdu), the other removed bits comprising virtual path and virtual channel identifier bits (VPI/VCI) and/or flow control bits (GFC).

8. A device as claimed in any one of claims 1 to 7, wherein the maximum number of times a numbered data unit (PadSdu) from the second sequence can be repeated is a programmable parameter.

## Patentansprüche

1. Vorrichtung, die eine Schnittstelle ist zwischen einer ATM-Ausrüstung und einem Übertragungskanal mit einer synchronen Funkverbindung, wobei die Schnittstellenvorrichtung vorgesehen ist, zu verarbeiten:
- ATM-Zellen,
- Einheiten aus segmentierten Daten (RaaSdu), die jeweils entweder Daten enthalten, die mindestens einer ATM-Zelle entnommen wurden, und eine Skalierungsinformation, welche die Anfänge von ATM-Zellen in den entnommenen Daten kennzeichnet, oder Fülldaten für den Fall, dass keine zu übertragenden ATM-Zellen vorhanden sind;
- Einheiten aus nummerierten Daten (PadSdu), die jeweils eine Einheit aus segmentierten Daten und eine Nummerierungsinformation enthalten, wobei bestimmte der Einheiten aus nummerierten Daten ferner eine Quittierungsinformation enthalten; und
- Einheiten aus geschützten Daten, welche die Größe von auf der Funkverbindung übertragbaren Paketen haben und jeweils ein Datenfeld aufweisen, das eine Einheit aus nummerierten Daten enthalten soll, sowie ein Feld zur Verifizierung der Vollständigkeit, das einen Vollständigkeits-Verifizierungs-Code enthalten soll, der aus der Einheit aus nummerierten Daten errechnet wurde,
wobei die Schnittstellenvorrichtung zum Senden eines ATM-Zellenflusses auf dem Übertragungskanal umfasst:
- einen Pufferspeicher (21), der den ATM-Zellenfluss von der ATM-Ausrüstung empfängt;
- Mittel (22, 23) zur Bildung einer ersten Sequenz aus Einheiten aus segmentierten Daten, die jeweils in dem Pufferspeicher gelesene Daten enthalten;
- Mittel (31-34) zur Bildung einer zweiten Sequenz aus Einheiten aus nummerierten Daten, die jeweils eine in dem Pufferspeicher gelesene Einheit aus segmentierten Daten der ersten Sequenz und eine Nummerierungsinformation enthalten, die in der Reihenfolge der Einheiten aus segmentierten Daten der ersten Sequenz erzeugt wurden;
- Mittel (41, 42) zur Bildung einer dritten Sequenz aus Einheiten aus geschützten Daten, die jeweils eine Einheit aus nummerierten Daten der zweiten Sequenz und den Vollständigkeits-Verifizierungs-Code enthalten, der für diese Einheit aus nummerierten Daten berechnet wurde,
wobei die Reihenfolge der Einheiten aus geschützten Daten in der dritten Sequenz diejenige der Einheiten aus nummerierten Daten ist, die sie in der zweiten Sequenz enthalten; und
- Mittel (50) zum Senden der dritten Sequenz aus Einheiten aus geschützten Daten auf dem Übertragungskanal,
wobei die Schnittstellenvorrichtung für den Empfang eines ATM-Zellenflusses vom Übertragungskanal umfasst:
- Mittel (50) zum Empfangen einer vierten Sequenz aus Einheiten aus geschützten Daten aus dem Übertragungskanal;
- Mittel (44) zur Erfassung von Übertragungsfehlern zur Neuberechnung eines Vollständigkeits-Verifizierungs-Codes auf der Basis des Inhalts des Datenfelds jeder Einheit aus geschützten Daten der vierten Sequenz, zum Vergleich des neu berechneten Codes mit dem Inhalt des Vollständigkeits-Verifizierungsfeldes der Einheit aus geschützten Daten und Anzeigen eines Übertragungsfehlers für die Einheit aus geschützten Daten, wenn der Vergleich eine Abweichung ergibt;
- Mittel (43) zur Bildung einer fünften Sequenz aus Einheiten aus nummerierten Daten, die jeweils den Einheiten aus geschützten Daten der vierten Sequenz entnommen wurden, für die kein Übertragungsfehler angezeigt wurde;
- Mittel (35, 36) zur Bildung einer sechsten Sequenz aus Einheiten aus segmentierten Daten, die jeweils den Einheiten aus nummerierten Daten der fünften Sequenz entnommen wurden; und
- Mittel (24, 26) zur Wiederherstellung eines an die ATM-Ausrüstung geschickten ATM-Zellenflusses aus den in den Einheiten aus segmentierten Daten der sechsten Sequenz enthaltenen Daten, die entsprechend den in den Einheiten aus nummerierten Daten der fünften Sequenz enthaltenen Nummerierungsinformationen neu geordnet wurden,
bei der die Mittel zur Bildung der zweiten Sequenz aus Einheiten aus nummerierten Daten Mittel (34) umfassen, die es ermöglichen, Quittierungsinformationen, die Einheiten aus geschützten Daten der vierten Sequenz anzeigen, für die ein Übertragungsfehler angezeigt wurde, in Einheiten aus nummerierten Daten der zweiten Sequenz einzufügen, sowie Mittel (33) zur Analyse der Quittierungsinformationen, die in den Einheiten aus nummerierten Daten der fünften Sequenz enthalten sind, um in die zweite Sequenz aus Einheiten aus nummerierten Daten Wiederholungen von Einheiten aus nummerierten Daten der zweiten Sequenz einzufügen, die in Einheiten aus geschützten Daten der dritten Sequenz enthalten sind, für welche die in den Einheiten aus nummerierten Daten der fünften Sequenz analysierten Quittierungsinformationen einen Übertragungsfehler anzeigen.

2. Vorrichtung nach Anspruch 1, bei der die Einheiten aus nummerierten Daten (PadSdu) der zweiten Sequenz in Zeitrahmen zusammengefasst werden, ebenso wie die Einheiten aus geschützten Daten der dritten und vierten Sequenz, und bei der Quittierungsinformationen, die ein Zeitfenster der vierten Sequenz betreffen, in die erste Einheit aus nummerierten Daten jedes Zeitfensters der zweiten Sequenz eingeschlossen sind.

3. Vorrichtung nach Anspruch 2, bei der die Mittel (33) zur Analyse der Quittierungsinformationen so vorgesehen sind, dass sie die Einheiten aus nummerierten Daten (PadSdu) eines Zeitfensters der zweiten Sequenz wiederholen lassen, wenn die Mittel (44) zur Erfassung von Fehlern einen Übertragungsfehler für die erste Einheit aus geschützten Daten eines Zeitfensters der vierten Sequenz anzeigen, die Quittierungsinformationen enthält, die das Zeitfenster der zweiten Sequenz betreffen.

4. Vorrichtung nach Anspruch 2 oder 3, bei der die Mittel (34) zum Einfügen von Quittierungsinformationen so vorgesehen sind, dass sie die Quittierungsinformationen, welche die Einheiten aus geschützten Daten eines Zeitfensters der vierten Sequenz anzeigen, für die ein Übertragungsfehler angezeigt wurde, in die ersten Einheiten aus nummerierten Daten (PadSdu) mindestens zweier Zeitfenster der zweiten Sequenz einfügen.

5. Vorrichtung nach einem der Ansprüche 1 bis 4, bei der die Quittierungsinformationen eine Bitzahl belegen, die von der auf der Funkverbindung verfügbaren Übertragungsrate abhängt.

6. Vorrichtung nach einem der Ansprüche 1 bis 5, bei der ein Codierungsbyte (HEC), das Fehler im Dateikopf ermittelt, aus den Daten entfernt wird, die jeder ATM-Zelle entnommen wurden, damit sie in einer Einheit aus segmentierten Daten (RaaSdu) enthalten sind.

7. Vorrichtung nach Anspruch 6, bei der weitere Bits des Datenkopfs jeder ATM-Zelle aus den Daten entfernt werden, die jeder ATM-Zelle entnommen wurden, damit sie in einer Einheit aus segmentierten Daten (RaaSdu) enthalten sind, wobei die anderen entfernten Bits bestimmte Bits der Kennzeichnungen der virtueller Leitung und Kanäle (VPI/VCI) und/oder Flusssteuerbits (GFC) umfassen.

8. Vorrichtung nach einem der Ansprüche 1 bis 7, bei der die maximale Anzahl von Malen, die eine Einheit aus nummerierten Daten (PadSdu) der zweiten Sequenz wiederholt werden kann, einen programmierbaren Parameter darstellt.
